(19) **Europäisches Patentamt / European Patent Office / Office européen des brevets**

(11) **EP 2 469 110 B1**

(12) # EUROPEAN PATENT SPECIFICATION

(45) Date of publication and mention
of the grant of the patent:
**02.07.2014  Bulletin 2014/27**

(51) Int Cl.:
*F16C 33/78* *(2006.01)*    *F16J 15/32* *(2006.01)*
*F16J 15/34* *(2006.01)*

(21) Application number: **11195325.3**

(22) Date of filing: **22.12.2011**

(54) **Sealing device and rolling bearing device provided with sealing device**

Abdichtvorrichtung und Kugellagervorrichtung mit der Abdichtvorrichtung

Dispositif d'étanchéité et dispositif de roulement fourni avec le dispositif d'étanchéité

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2010  JP 2010288423**

(43) Date of publication of application:
**27.06.2012  Bulletin 2012/26**

(73) Proprietors:
• **JTEKT Corporation
Osaka-shi, Osaka 542-8502 (JP)**
• **KOYO SEALING TECHNO KABUSHIKI KAISHA
Itano-gun, Tokushima-ken 771-1295 (JP)**

(72) Inventors:
• **Morimoto, Kengo
Osaka-shi, Osaka 542-8502 (JP)**
• **Sunagawa, Masahide
Itano-gun, Tokushima-ken, 771-1295 (JP)**

(74) Representative: **Winter, Brandl, Fürniss, Hübner,
Röss, Kaiser, Polte - Partnerschaft
Patent- und Rechtsanwaltskanzlei
Bavariaring 10
80336 München (DE)**

(56) References cited:
**WO-A1-2005/017376      GB-A- 2 310 467
US-A1- 2005 023 766**

## Description

BACKGROUND OF THE INVENTION

1. Field of the Invention

The invention relates to a rolling bearing device provided with a sealing device according to the preamble of claim 1. Such device has become known from JP-A-2001-254840.

2. Description of Related Art

A rolling bearing that rotatably supports a reduction roll of a rolling mill is provided with a sealing device for sealing an annular space between an inner ring and an outer ring (for example, see Japanese Patent Application Publication No. 2001-254840). The sealing device described in JP-A-2001-254840 seals a gap between a second member connected to an inner ring side and a first member connected to an outer ring side. The sealing device is mounted on the second member, and has a seal lip that is slidably in close contact with the side surface of the first member. The seal lip is slidably in close contact with the first member during low-speed rotation; whereas the seal lip is elastically deformed to be separated from the first member because of centrifugal force during high-speed rotation and forms a labyrinth seal.

In the technique described in JP-A-2001-254840, the seal lip closely contacts with the first member during low-speed rotation of the rolling bearing; however, the seal lip separates from the first member to form a labyrinth seal during high-speed rotation, so it is possible to prevent heat generation resulting from sliding of the seal lip over the first member during high-speed rotation, and it is possible to suppress a decrease in sealing performance, a loss of life, and the like, due to the heat generation. However, it is extremely difficult to appropriately adjust the gap between the seal lip and the first member during high-speed rotation because of a variation in relative position in the axial direction between the first member and the second member, a manufacturing error of the seal lip, and the like, and there is a possibility that a desired effect of preventing heat generation and/or a desired sealing effect cannot be obtained if the gap is too small or too large.

SUMMARY OF THE INVENTION

The invention provides a sealing device that is able to maintain the sealing effect while eliminating inconvenience due to heat generation during high-speed rotation and a rolling bearing device provided with the sealing device.

An aspect of the invention relates to a sealing device. The sealing device seals an annular space between a first member and a second member that relatively rotate with respect to each other at a boundary portion between an inside and outside of a rolling bearing. A seal member is connected to one of the first member and the second member, and includes a plurality of seal lips. The plurality of seal lips include a first seal lip and a second seal lip. A sliding surface is provided for the other one of the first member and the second member, and with which the first seal lip and the second seal lip contact. The second seal lip is arranged more adjacent to the outside of the rolling bearing than the first seal lip. A second contact pressure of the second seal lip against the sliding surface is higher than a first contact pressure of the first seal lip against the sliding surface.

Generally, the inside of a rolling bearing tends to accumulate heat and becomes high temperatures, and the outside of the rolling bearing touches outside air, coolant, or the like, to increase its heat dissipation characteristic and becomes low temperatures as compared with the inside thereof. The sealing device according to the aspect of the invention increases the second contact pressure of the second seal lip arranged adjacent to the outside of the rolling bearing having a higher heat dissipation characteristic as compared with the first contact pressure of the first seal lip. That is, in the second seal lip, sealing performance is enhanced while heat generation during high-speed rotation is suppressed. The first contact pressure of the first seal lip that is arranged adjacent to the inside of the rolling bearing at which heat tends to accumulate is relatively decreased as compared with the second contact pressure of the second seal lip. That is, in the first seal lip, heat generation during high-speed rotation is suppressed. Thus, the sealing device as a whole is able to suppress heat generation during high-speed rotation without decreasing sealing performance, so it is possible to suppress inconvenience, such as a degradation of life, due to the heat generation.

A first interference of the first seal lip against the sliding surface may be different from a second interference of the second seal lip against the sliding surface, and the first contact pressure and the second contact pressure may be varied from each other by a difference between the first interference and the second interference. With the above configuration, the first seal lip and the second seal lip having the same shape and same stiffness may be brought into contact with the sliding surface at different contact pressures. The second interference may be larger than the first interference.

A first bending stiffness of the first seal lip in a direction in which the first seal lip contacts with the sliding surface may be different from a second bending stiffness of the second seal lip in a direction in which the second seal lip contacts with the sliding surface, and the first contact pressure and the second contact pressure may be varied from each other by a difference between the first bending stiffness and the second bending stiffness. With the above configuration, even when the first seal lip and the second seal lip have the same interference against the sliding surface, the first seal lip and the second seal lip may be brought into contact with the sliding surface at different contact pressures. The second bending stiffness may be larger than the first bending stiffness.

The second seal lip may be provided on an outer side of the first seal lip in a radial direction of the rolling bearing.

The seal member may be connected to the second member that performs rotating motion. In addition, a first rate of change in the first contact pressure of the first seal lip with respect to a rotation speed at which the seal member rotates with rotation of the second member may be larger than a second rate of change in the second contact pressure of the second seal lip with respect to the rotation speed. When the seal member is connected to the second member that performs rotating motion, as the rotation speed of the seal member increases, the contact pressures of the seal lips are decreased by the centrifugal force. Then, when the rates of change in the contact pressures of the seal lips with respect to the rotation speed of the seal member are set such that the first seal lip arranged adjacent to the inside of the rolling bearing has a larger rate of change, as the rotation speed of the seal member increases, the contact pressure of the first seal lip more adjacent to the inside of the rolling bearing than the second seal lip decreases significantly. Thus, during high-speed rotation, it is possible to further effectively suppress heat generation of the first seal lip adjacent to the inside of the rolling bearing at which heat tends to accumulate. Conversely, a decrease in the contact pressure of the second seal lip adjacent to the outside of the rolling bearing reduces, so it is possible to suppress a decrease in sealing performance during high-speed rotation.

The seal member may be connected to the second member that performs rotating motion. In addition, the seal member may have a distal end portion that is arranged at a radially outer end of the seal member with a gap from an inner peripheral surface of the first member. Then, the distal end portion may have an inner surface and an outer surface that are inclined in mutually opposite directions, and may be tapered radially outward. By so doing, water entered inside the seal member easily flows toward the outside with rotation of the seal member by the inner surface of the distal end portion. In addition, water soused on the outer surface of the seal member is easily repelled toward the outside by the outer surface of the distal end portion. Thus, it is possible to make it hard for water to enter the seal member and make it easy to drain entered water.

Another aspect of the invention relates to a rolling bearing device. The rolling bearing device includes a rolling bearing. The rolling bearing includes an inner ring, an outer ring that is provided on a radially outer side of the inner ring and a plurality of rolling elements that are rollably provided between the inner ring and the outer ring. The bearing device further includes the above described sealing device that is provided at an axial end of the rolling bearing.

According to the above aspects of the invention, it is possible to maintain sealing effect while eliminating inconvenience due to heat generation during high-speed rotation as much as possible.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a sectional view that shows a rolling bearing device to which sealing devices according to a first embodiment of the invention are assembled;
FIG. 2 is an enlarged sectional view that shows one of the sealing devices shown in FIG. 1; and
FIG. 3 is a graph that shows the correlation between the rotation speed of a seal member and the contact pressures of seal lips in a second embodiment of the invention.

DETAILED DESCRIPTION OF EMBODIMENTS

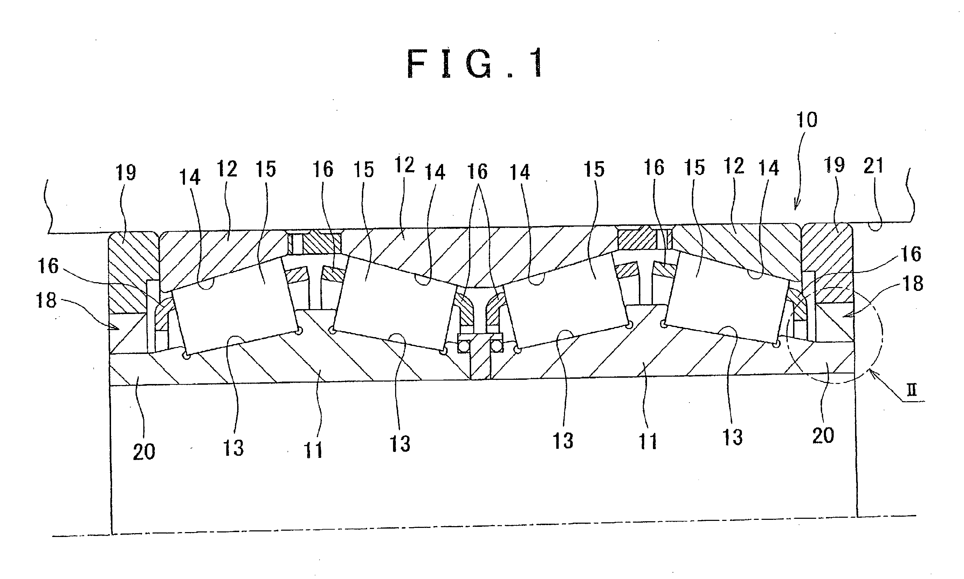

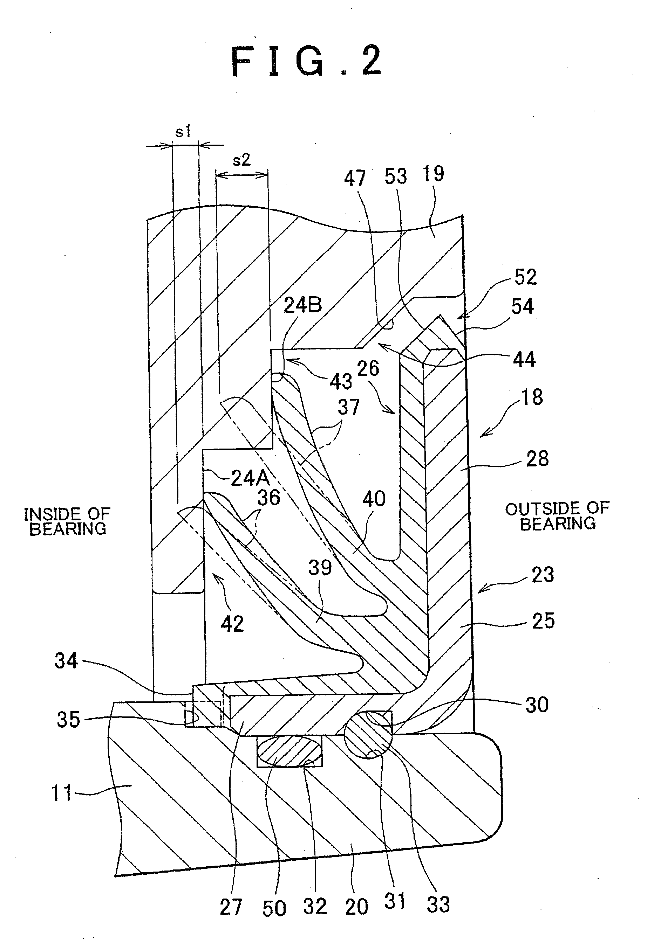

Hereinafter, an embodiment of a sealing device and rolling bearing device according to the aspects of the invention will be described with reference to the accompanying drawings. FIG. 1 is a sectional view that shows sealing devices and a rolling bearing device according to a first embodiment of the invention. FIG. 2 is an enlarged sectional view that shows one of the sealing devices shown in FIG. 1. Note that, in these drawings, the horizontal direction is referred to as axial direction, and the vertical direction is referred to as radial direction. In addition, a direction directed from the inside of a rolling bearing 10 toward the outside of the rolling bearing 10 in the axial direction is referred to as axially outward direction, and a direction directed from the outside of the rolling bearing 10 toward the inside of the rolling bearing 10 is referred to as axially inward direction.

As shown in FIG. 1, the rolling bearing 10 is a four-row tapered roller bearing that is, for example, used as a bearing for supporting a reduction roll. The rolling bearing 10 includes two inner rings 11, three outer rings 12, four rows of tapered rollers 15 and four cages 16. The two inner rings 11 are fitted to the outer peripheral surface of one end of the reduction roll and are arranged in the axial direction. The three outer rings 12 are arranged coaxially on the radially outer side of these inner rings 11 and are aligned in the axial direction. The tapered rollers 15 are arranged between the inner ring raceway surfaces 13 formed on the inner rings 11 and the outer ring raceway surfaces formed on the outer rings 12, and roll on the raceway surfaces. The cages 16 each keep the gap in the circumferential direction between the adjacent tapered rollers 15 in a corresponding one of the rows.

Sealing devices 18 that respectively seal the boundary portions between the inside and outside of the rolling bearing 10 are provided at both axial ends of the rolling bearing 10. Each sealing device 18 prevents leakage of lubricating oil supplied to the inside of the rolling bearing 10, and prevents entry of coolant for cooling the reduction roll, or the like, into the inside of the rolling bearing 10. Specifically, each sealing device 18 seals an annular space formed between a first member 19 and a second member 20 that are provided at a corresponding one of the axial ends of the rolling bearing 10. The second members 20 are respectively formed of projecting portions that are provided at the axially outer ends of the two inner rings 11. Each projecting portion extends in the axial direction from the inside of the rolling bearing 10 toward the outside of the rolling bearing 10. The first members 19 are respectively arranged on the radially outer sides of the projecting portions 20 of the inner rings 11, and are respectively arranged next to the outer rings 12. In addition, the first members 19 and the outer rings 12 are fitted to a housing 21.

As shown in FIG. 2, each sealing device 18 has a seal member 23, a first sliding surface 24A and a second sliding surface 24B. The seal member 23 is connected to the outer peripheral surface of the second member 20, and has a plurality of seal lips 36 and 37. The first sliding surface 24A and the second sliding surface 24B are provided for the first member 19. The plurality of seal lips 36 and 37 respectively contact with the first sliding surface 24A and the second sliding surface 24B. The seal member 23 is formed in such a manner that a seal portion 26 made of an elastic material, such as rubber, is bonded to a core metal 25. The sectional shape of the core metal 25 is formed in a substantially L shape. The core metal 25 is formed in an annular shape as a whole. The core metal 25 is formed of a cylindrical portion 27 and an annular portion 28. The cylindrical portion 27 is formed in a cylindrical shape, and is fitted around the outer peripheral surface of the projecting portion (second member) 20 of a corresponding one of the inner rings 11. The annular portion 28 is bent substantially vertically to extend radially outward from the axially outer end of the cylindrical portion 27. The core metal 25 is, for example, formed by pressing cold-rolled steel, such as SPCC, SPCD and SPCE.

The inner peripheral surface of the cylindrical portion 27 of the core metal 25 has a recess 30, and the outer peripheral surface of the second member 20 has a recess 31. Then, a flexible rod-like member 33 is inserted in the recess 30 and the recess 31 to restrict positional deviation of the core metal 25 in the axial direction with respect to the second member 20. In addition, the second member 20 further has a recess 32 that accommodates an O ring 50.

The seal portion 26 is mainly bonded to the outer peripheral surface of the cylindrical portion 27 of the core metal 25 and the axially inner side surface (left side surface in FIG. 2) of the annular portion 28. Then, the seal portion 26 has the two seal lips 36 and 37 that extend obliquely radially outward and axially inward (leftward in FIG. 2) from near the bent portion between the cylindrical portion 27 and the annular portion 28. The axially inner end of the seal portion 26 has a plurality of protrusions 34 in the circumferential direction. The protrusions 34 are fitted to fitting recesses 35 formed at the inner peripheral portion of the second member 20 to thereby stop rotation of the seal member 23 in the circumferential direction.

The two seal lips 36 and 37 are different in positions in the radial direction from each other. In the present embodiment, the seal lip 36 is termed first seal lip, and the seal lip 37 that is located on the radially outer side of the seal lip 36 is termed second seal lip. In addition, in FIG. 2, the first seal lip 36 and the second seal lip 37 in a condition where they are respectively in contact with the first sliding surface 24A and the second sliding surface 24B and are elastically deformed are indicated by continuous line, and the first seal lip 36 and the second seal lip 37 in a natural condition (no-load condition) before they respectively contact with the sliding surfaces 24A and 24B are indicated by alternate long and two short dashes line.

The first seal lip 36 has a first bent portion 39 at its proximal portion side. The first bent portion 39 is bent slightly radially outward. Similarly, the second seal lip 37 has a second bent portion 40 at its proximal portion side. The second seal lip 37 is bent slightly radially outward. Then, the first seal lip 36 is easily bent upward about the first bent portion 39, and the second seal lip 37 is easily bent upward about the second bent portion 40.

The inner peripheral surface of the first member 19 is formed in a stepwise manner such that the bore diameter increases toward the axially outer side. Specifically, the inner peripheral portion of the first member 19 has three step portions (a first step portion 42, a second step portion 43 and a third step portion 44) that are aligned in the axial direction from the inside of the bearing toward the outside of the bearing. The heights (radial sizes) of the step portions 42, 43 and 44 are set such that the height of the first step portion 42 is the largest and the height of the third step portion 44 is the smallest. In addition, the first step portion 42 has a first side surface 24A, and the second step portion 43 has a second side surface 24B. The first side surface 24A and the second side surface 24B are substantially vertical to the shaft center. The third step portion 44 has a third side surface 47. The third side surface 47 is inclined such that the bore diameter increases toward the axially outer side. Then, the first side surface 24A of the first step portion 42 constitutes the first sliding surface over which the first seal lip 36 slides. The second side surface 24B of the second step portion 43 constitutes the second sliding surface over which the second seal lip 37 slides.

The first seal lip 36 is in contact with the first sliding surface 24A with a first interference s1. In contrast to this, the second seal lip 37 is in contact with the second sliding surface 24B with a second interference s2. The first interference s1 of the first seal lip 36 is smaller than the second interference s2 of the second seal lip 37. More desirably, the first interference s1 and the second interference s2 are set such that s1/s2 ranges from 0.3 to 0.6. The first seal lip 36 and the second seal lip 37 are formed to have substantially the same thickness and substantially equal bending stiffness; however, the first interference s1 and the second interference s2 are different from each other. Therefore, the first contact pressure of the first seal lip 36 against the first sliding surface 24A and the second contact pressure of the second seal lip 37 against the second sliding surface 24B are different from each other, and the first contact pressure is lower than the second contact pressure. In other words, the plurality of seal lips 36 and 37 are configured such that the contact pressure against the sliding surface 24B adjacent to the outside of the rolling bearing 10 is higher than the contact pressure against the sliding surface 24A.

Note that the first seal lip 36 and the second seal lip 37 are not limited to the configuration that the contact pressures of the first seal lip 36 and second seal lip 37 are varied by the difference between the first interference s1 and the second interference s2; instead, for example, the contact pressures may be varied by the difference between the first bending stiffness of the first seal lip 36 and the second blending stiffness of the second seal lip 37. In this case, both the first interference s1 and the second interference s2 may be equal to each other. Specifically, by setting the second bending stiffness of the second seal lip 37 so as to be higher than the first bending stiffness of the first seal lip 36, even when the first interference s1 is equal to the second interference s2, the second contact pressure of the second seal lip 37 may be set so as to be higher than the first contact pressure of the first seal lip 36. In addition, the contact pressures may be varied by utilizing both the difference in interference between s1 and s2 and the difference in bending stiffness, or the contact pressures may be varied by utilizing one of the difference in interference between s1 and s2 and the difference in bending stiffness.

The axially inner side (inside of the rolling bearing 10) with respect to the sealing device 18 is heated to high temperatures as the rolling bearing 10 performs rotating motion and, moreover, heat does not escape and tends to accumulate. In contrast to this, the axially outer side (outside of the rolling bearing 10) with respect to the sealing device 18 has a high heat dissipation characteristic because coolant for cooling the reduction roll is splashed on the axially outer side or outside air touches the axially outer side.

Then, in the present embodiment, the second contact pressure of the second seal lip 37 arranged adjacent to the outside of the rolling bearing 10 is higher in contact pressure against the corresponding sliding surface 24B than the first contact pressure of the first seal lip 36, so the second seal lip 37 has higher sealing performance than that of the first seal lip 36. Moreover, the second seal lip 37 is arranged at a position at which the heat dissipation characteristic is high, so heat generation during high-speed rotation is also suppressed. On the other hand, the first seal lip 36 is arranged adjacent to the inside of the rolling bearing 10 at which heat tends to accumulate; however, the contact pressure of the first seal lip 36 against the first sliding surface 24A is low, so heat generation during high-speed rotation is suppressed. Thus, both the first seal lip 36 and the second seal lip 37 are able to appropriately maintain sealing performance while suppressing heat generation during high-speed rotation as well, so it is possible to eliminate inconvenience, such as a degradation of life due to the heat generation.

The seal member 23 is formed in an acuate shape such that part (distal end portion) 52 of the seal portion 26, covering the radially outer end of the annular portion 28, is tapered radially outward. That is, the distal end portion 52 of the seal member 23 has an inner surface 53 and an outer surface 54 that are inclined in mutually opposite directions. The inner surface 53 faces the third side surface 47 and is substantially parallel to the third side surface 47. Then, the inclination of the inner surface 53 functions so as to drain water, entered inside the seal member 23, outward of the seal member 23 with rotation. In addition, the inclination of the outer surface 54 functions so as to repel water, soused from the outer side, radially outward. Thus, owing to the shape of the distal end portion 52 of the seal member 23, water is hard to enter the inside of the seal member 23 and, in addition, it is possible to easily drain entered water.

As shown in FIG. 2, as the second member 20 rotates, the seal member 23 also rotates accordingly, and centrifugal force acts on the first seal lip 36 and the second seal lip 37 so as to open radially outward. As such centrifugal force acts, the contact pressure of the seal lip 36 against the first sliding surface 24A and the contact pressure of the seal lip 37 against the second sliding surface 24B vary. Then, in a second embodiment, the rate of change in the contact pressure of the first seal lip 36 with respect to the rotation speed of the seal member 23 is varied from the rate of change in the contact pressure of the second seal lip 37 with respect to the rotation speed of the seal member 23 as described below.

Where the rotation speed at which the seal member 23 rotates with the rotation of the second member 20 is V and the first contact pressure of the first seal lip 36 against the first sliding surface 24A is PI, the first rate of change $\Delta$PI in the first contact pressure PI with respect to the rotation speed V may be expressed by the following mathematical expression (1).

$$\Delta\mathrm{PI} = \mathrm{PI/V} \qquad (1)$$

In addition, where the second contact pressure of the second seal lip 37 against the second sliding surface 24B is PO, the second rate of change ΔPO in the second contact pressure PO with respect to the rotation speed V may be expressed by the following mathematical expression (2).

$$\Delta PO = PO/V \quad (2)$$

Then, in the second embodiment, the rate of change ΔPI and the rate of change ΔPO are set to satisfy the relationship as expressed by the following mathematical expression (3).

$$\Delta PI/\Delta PO > 1.3 \quad (3)$$

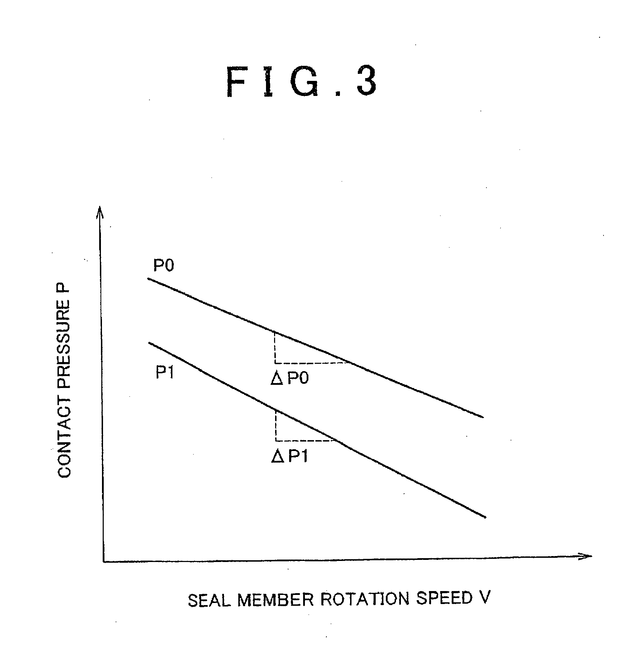

The relationship among the above mathematical expressions (1) to (3) is shown by the graph in FIG. 3. According to the graph, the first rate of change ΔPI in the first contact pressure of the first seal lip 36 against the first sliding surface 24A is larger (larger in the inclination of the graph) than the second rate of change ΔPO in the second contact pressure of the second seal lip 37. By setting in this way, as the rotation speed V of the seal member 23 increases, the first contact pressure of the first seal lip 36 decreases by a larger rate than the second contact pressure of the second seal lip 37. In other words, the second contact pressure of the second seal lip 37 does not decrease so large as the first contact pressure of the first seal lip 36 decreases. Thus, it is possible to further effectively suppress heat generation of the first seal lip 36 during high-speed rotation, and it is possible to suppress a decrease in sealing performance due to the second seal lip 37. Note that, as described above, the first rate of change ΔPI in the first contact pressure and the second rate of change ΔPO in the second contact pressure may be varied from each other by adjusting the bending stiffness, or the like, of each of the seal lips 36 and 37. In addition, the contact pressures may be varied by utilizing the difference in rate of change according to the second embodiment in addition to both the difference in interference between s1 and s2 and the difference in bending stiffness, which are described in the first embodiment. In addition, the contact pressures may be varied by utilizing at least one of the difference in interference between s1 and s2, the difference in bending stiffness and the difference in rate of change according to the second embodiment.

The aspect of the invention is not limited to the above described embodiments; it may be appropriately modified within the scope of the invention recited in the appended claims. Three or more seal lips may be provided for the seal member 23 of each sealing device 18. In this case, the contact pressure of the seal lip against the sliding surface just needs to be increased as the seal lip is located more adjacent to the outside of the rolling bearing 10. For example, when three seal lips are provided, and when it is assumed that the first seal lip is a seal lip located most adjacent to the inside of the rolling bearing 10, the second seal lip may be a seal lip located most adjacent to the outside of the rolling bearing 10 or may be an intermediate seal lip located between the seal lip located most adjacent to the inside of the rolling bearing 10 and the seal lip located most adjacent to the outside of the rolling bearing 10. In addition, when the first seal lip is the intermediate seal lip, the second seal lip corresponds to the seal lip located most adjacent to the outside of the rolling bearing 10. In addition, the plurality of seal lips may be aligned in the axial direction.

In the above embodiments, the seal member 23 is provided for the second member 20 and the sliding surface 24 is provided for the first member 19; instead, the seal member 23 may be provided for the first member 19 and the sliding surface 24 may be provided for the second member 20. In addition, in the above embodiments, the first seal lip 36 is arranged adjacent to the inside of the rolling bearing 10 and the second seal lip 37 is arranged adjacent to the outside of the rolling bearing 10; instead, the arrangement of them may be opposite.

The second member 20 may be separated from the inner ring 11, and the first member 19 may be integrated with the outer ring 12. In addition, the second member 20 may be integrated with the shaft of a reduction roll, or the like, and the first member 19 may be integrated with the housing 21. The aspect of the invention is not limited to the sealing device 18 or the rolling bearing 10 used in the shaft support device of a reduction roll; instead, it may be applied to the sealing device 18 or the rolling bearing 10 used in any other devices.

**Claims**

1. A rolling bearing device comprising:

   a rolling bearing (10) for supporting a shaft, wherein the rolling bearing (10) includes an inner ring (11), an outer ring (12) that is provided on a radially outer side of the inner ring (11), a plurality of rolling elements (15) that are rollably provided between the inner ring (11) and the outer ring (12), and a sealing device that seals an annular space between a first member (19) and a second member (20) that relatively rotate with respect to each other at a boundary portion between an inside and outside of the rolling bearing (10), said sealing device including:

      a seal member (23) that is connected to one of the first member (19) and the second member (20) and that includes a plurality of seal lips, wherein the plurality of seal lips include a first seal lip (36) and a second seal lip (37); and

a sliding surface (24A, 24B) that is provided for the other one of the first member and the second member and with which the first seal lip (36) and the second seal lip (37) contact, wherein

the second seal lip (37) is arranged more adjacent to the outside of the rolling bearing (10) than the first seal lip (36), and wherein the second seal lip (37) is arranged at a position at which the heat dissipation characteristic is high, and the first seal lip (36) is arranged adjacent to the inside of the rolling bearing (10) at which heat tends to accumulate;

the sealing device being **characterized in that**

a second contact pressure (PO) of the second seal lip (37) against the sliding surface (24B) is higher than a first contact pressure (PI) of the first seal lip (36) against the sliding surface (24A).

2. The device according to claim 1, **characterized in that**

a first interference (s1) of the first seal lip (36) against the sliding surface (24A) is different from a second interference (s2) of the second seal lip (37) against the sliding surface (24B), and

the first contact pressure (PI) and the second contact pressure (PO) are varied from each other by a difference between the first interference and the second interference.

3. The device according to claim 2, **characterized in that**

the second interference (s2) is larger than the first interference (s1).

4. The device according to any one of claims 1 to 3, **characterized in that**

a first bending stiffness of the first seal lip (36) in a direction in which the first seal lip (36) contacts with the sliding surface (24A) is different from a second bending stiffness of the second seal lip (37) in a direction in which the second seal lip (37) contacts with the sliding surface (24B), and

the first contact pressure (PI) and the second contact pressure (PO) are varied from each other by a difference between the first bending stiffness and the second bending stiffness.

5. The device according to claim 4, **characterized in that**

the second bending stiffness is larger than the first bending stiffness.

6. The device according to any one of claims 1 to 5, **characterized in that**

the second seal lip (37) is provided on an outer side of the first seal lip (36) in a radial direction of the rolling bearing (10).

7. The device according to any one of claims 1 to 6, **characterized in that**

the seal member (23) is connected to the second member (20) that performs rotating motion, and

a first rate of change ((PI) in the first contact pressure (PI) of the first seal lip (36) with respect to a rotation speed at which the seal member (23) rotates with rotation of the second member (20) is larger than a second rate of change ((PO) in the second contact pressure (PO) of the second seal lip (37) with respect to the rotation speed.

8. The device according to any one of claims 1 to 7, **characterized in that**

the sliding surface (24A, 24B) includes a first sliding surface (24A) and a second sliding surface (24B),

the first seal lip (36) contacts with the first sliding surface (24A), and

the second seal lip (37) contacts with the second sliding surface (24B).

9. The device according to any one of claims 1 to 8, **characterized in that**

the seal member (23) is connected to the second member (20) that performs rotating motion,

the seal member (23) has a distal end portion (52) that is arranged at a radially outer end of the seal member (23) with a gap from an inner peripheral surface of the first member (19), and

the distal end portion (52) has an inner surface (53) and an outer surface (54) that are inclined in mutually opposite directions, and is tapered radially outward.

10. The device according to any one of claims 1 to 9, wherein the sealing device is provided at an axial end of the rolling bearing (10).

**Patentansprüche**

1. Wälzlagervorrichtung, mit:

einem Wälzlager (10) zum Stützen eine Welle, wobei das Wälzlager (10);

einen Innenring (11), einen an einer in Radialrichtung Außenseite des Innenrings (11) vorgesehenen Außenring (12), eine Vielzahl von Wälzkörper (15), die zwischen dem Innenring (11) und dem Außenring (12) abwälzen kann, und eine Dichtvorrichtung aufweist, die einen ringförmigen Bereich zwischen einem ersten Element (19) und einem zweiten Element (20), welche relativ zueinander rotieren, an einem Randabschnitt zwischen einer Innenseite und einer Außenseite des Wälzlagers (10) abdichtet, wobei

die Dichtvorrichtung ein Dichtungselement (23), das mit dem ersten Element (19) oder dem zweiten Element (20) verbunden ist und eine Vielzahl von Dichtungslippen aufweist, wobei die Vielzahl von Dichtungslippen eine erste Dichtungslippe (36) und einer zweite Dichtungslippe (37) aufweist; und

eine Gleitfläche (24A, 24B) aufweist, welche für das andere von dem ersten Element (19) und dem zweiten Element (20) vorgesehen ist und mit welcher die erste Dichtungslippe (36) und die zweite Dichtungslippe (37) in Kontakt sind, wobei

die zweite Dichtungslippe (37) mehr als die erste Dichtungslippe (36) benachbart an die Außenseite des Wälzlagers (10) angeordnet ist, und die zweite Dichtungslippe (37) an einer Position angeordnet ist, an der eine Wärmeableiteeigenschaft hoch ist und die erste Dichtungslippe (36) benachbart zur Innenseite des Wälzlagers (10), an welcher Wärme dazu neigt, aufgestaut zu werden, angeordnet ist;

wobei die Dichtvorrichtung **dadurch gekennzeichnet, dass**

eine zweite Anpresskraft (PO) der zweiten Dichtungslippe (37) gegen die Gleitfläche (24B) größer als eine erste Anpresskraft (PI) der ersten Dichtungslippe (36) gegen die Gleitfläche (24A) ist.

2. Wälzlagervorrichtung nach Anspruch 1, **dadurch gekennzeichnet, dass**

eine erste Interferenz (s1) der ersten Dichtungslippe (36) gegen die Gleitfläche (24A) von einer zweiten Interferenz (s2) der zweiten Dichtungslippe (37) gegen die Gleitfläche (24B) verscheiden ist; und die erste Anpresskraft (PI) und die zweite Anpresskraft (PO) um eine Differenz zwischen der ersten Interferenz und der zweiten Interferenz voneinander verschieden sind.

3. Wälzlagervorrichtung nach Anspruch 2, **dadurch gekennzeichnet, dass** die zweite Interferenz (s2) größer als die erste Interferenz (s1) ist.

4. Wälzlagervorrichtung nach einem der Ansprüche 1 bis 3, **dadurch gekennzeichnet, dass**

eine erste Biegesteifigkeit der ersten Dichtungslippe (36) in eine Richtung, in welcher die erste Dichtungslippe (36) mit der Gleitfläche (24A) in Kontakt gelangt, von einer zweiten Biegesteifigkeit der zweiten Dichtungslippe (37) in eine Richtung, in welcher die zweite Dichtungslippe (37) mit der Gleitfläche (24B) in Kontakt gelangt, verschieden ist; und

die erste Anpresskraft (PI) und die zweite Anpresskraft (PO) um eine Differenz zwischen der ersten Biegesteifigkeit und der zweiten Biegesteifigkeit voneinander verschieden sind.

5. Wälzlagervorrichtung nach Anspruch 4, **dadurch gekennzeichnet, dass** die zweite Biegesteifigkeit größer als die erste Biegesteifigkeit ist.

6. Wälzlagervorrichtung nach einem der Ansprüche 1 bis 5, **dadurch gekennzeichnet, dass** die zweite Dichtungslippe (37) in einer Radialrichtung des Wälzlagers (10) an einer Außenseite der ersten Dichtungslippe (36) vorgesehen ist.

7. Wälzlagervorrichtung nach einem der Ansprüche 1 bis 6, **dadurch gekennzeichnet, dass**

das Dichtungselement (23) mit dem zweiten Element (20), welches eine Drehbewegung ausführt, verbunden ist; und

eine erste Änderungsrate ($\Delta$PI) der ersten Anpresskraft (PI) der ersten Dichtungslippe (36) bezüglich einer Rotationsgeschwindigkeit, mit welcher das Dichtungselement (23) mit Rotation des zweiten Elements (20) rotiert, größer als eine zweite Änderungsrate ($\Delta$PO) der zweiten Anpresskraft (PO) der zweiten Dichtungslippe (37) bezüglich der Rotationsgeschwindigkeit ist.

8. Wälzlagervorrichtung nach einem der Ansprüche 1 bis 7, **dadurch gekennzeichnet, dass**

die Gleitfläche (24A, 24B) eine erste Gleitfläche (24A) und eine zweite Gleitfläche (24B) aufweist; die erste Dichtungslippe (36) mit der ersten Gleitfläche (24A) in Kontakt steht; und die zweite Dichtungslippe (37) mit der zweiten Gleitfläche (24B) in Kontakt steht.

9. Wälzlagervorrichtung nach einem der Ansprüche 1 bis 8, **dadurch gekennzeichnet, dass**

das Dichtungselement (23) mit dem zweiten Element (20), welches eine Drehbewegung ausführt, verbunden ist;

das Dichtungselement (23) einen distalen Endabschnitt (52) aufweist, der an einem in Radialrichtung äußeren Ende des Dichtungselements (23) mit einem Spalt zu einer Innenumfangsfläche des ersten Elements (19) angeordnet ist; und

der distale Endabschnitt (52) eine Innenfläche (53) und eine Außenfläche (54), die in zueinander entgegen gesetzte Richtungen geneigt sind, aufweist und in Radialrichtung nach außen abgeschrägt ist.

10. Wälzlagervorrichtung nach einem der Ansprüche 1 bis 9, wobei die Dichtvorrichtung an einem axialen Ende des Wälzlagers (10) vorgesehen ist.

**Revendications**

1. Dispositif de roulement comprenant :

   un roulement (10) pour supporter un arbre, dans lequel le roulement (10) comprend une bague interne (11), une bague externe (12) qui est prévue sur un côté radialement externe de la bague interne (11),
   une pluralité d'éléments roulants (15) qui sont prévus de manière roulante entre la bague interne (11) et la bague externe (12), et
   un dispositif d'étanchéité qui réalise l'étanchéité d'un espace annulaire entre un premier élément (19) et un second élément (20) qui tournent relativement l'un par rapport à l'autre au niveau d'une partie de limite entre un intérieur et un extérieur du roulement (10), ledit dispositif d'étanchéité comprenant :

   un élément de joint d'étanchéité (23) qui est raccordé à l'un parmi le premier élément (19) et le second élément (20) et qui comprend une pluralité de lèvres de joint d'étanchéité, dans lequel la pluralité de lèvres de joint d'étanchéité comprennent une première lèvre de joint d'étanchéité (36) et une seconde lèvre de joint d'étanchéité (37); et

   une surface coulissante (24A, 24B) qui est prévue pour l'autre parmi le premier élément et le second élément et avec laquelle la première lèvre de joint d'étanchéité (36) et la seconde lèvre de joint d'étanchéité (37) sont en contact, dans lequel :

   la seconde lèvre de joint d'étanchéité (37) est agencée de manière plus adjacente à l'extérieur du roulement (10) que la première lèvre de joint d'étanchéité (36), et dans lequel :

   la seconde lèvre de joint d'étanchéité (37) est agencée dans une position dans laquelle la caractéristique de dissipation de chaleur est importante, et la première lèvre de joint d'étanchéité (36) est agencée de manière adjacente à l'intérieur du roulement (10) au niveau duquel la chaleur a tendance à s'accumuler;
   le dispositif d'étanchéité étant **caractérisé en ce que** :

   une seconde pression de contact (PO) de la seconde lèvre de joint d'étanchéité (37) contre la surface coulissante (24B) est plus importante qu'une première pression de contact (PI) de la première lèvre de joint d'étanchéité (36) contre la surface coulissante (24A).

2. Dispositif selon la revendication 1, **caractérisé en ce que** :

   une première interférence (s1) de la première lèvre de joint d'étanchéité (36) contre la surface coulissante (24A) est différente d'une seconde interférence (s2) de la seconde lèvre de joint d'étanchéité (37) contre la surface coulissante (24B), et
   la première pression de contact (PI) et la seconde pression de contact (PO) sont modifiées l'une par rapport à l'autre par une différence entre la première interférence et la seconde interférence.

3. Dispositif selon la revendication 2, **caractérisé en ce que** :

   la seconde interférence (s2) est plus importante que la première interférence (s1).

4. Dispositif selon l'une quelconque des revendications 1 à 3, **caractérisé en ce que** :

   une première rigidité à la flexion de la première lèvre de joint d'étanchéité (36) dans une direction dans laquelle la première lèvre de joint d'étanchéité (36) est en contact avec la surface coulissante (24A) est différente d'une seconde rigidité à la flexion de la seconde lèvre de joint d'étanchéité (37) dans une direction dans laquelle la seconde lèvre de joint d'étanchéité (37) est en contact avec la surface coulissante (24B), et
   la première pression de contact (PI) et la seconde pression de contact (PO) sont modifiées l'une par rapport à l'autre par une différence entre la première rigidité à la flexion et la seconde rigidité à la flexion.

5. Dispositif selon la revendication 4, **caractérisé en ce que** :

   la seconde rigidité à la flexion est plus importante que la première rigidité à la flexion.

6. Dispositif selon l'une quelconque des revendications 1 à 5, **caractérisé en ce que** :

   la seconde lèvre de joint d'étanchéité (37) est prévue sur un côté externe de la première lèvre de joint d'étanchéité (36) dans une direction radiale du roulement (10).

**7.** Dispositif selon l'une quelconque des revendications 1 à 6, **caractérisé en ce que** :

l'élément de joint d'étanchéité (23) est raccordé au second élément (20) qui réalise le mouvement de rotation, et
un premier taux de changement (PI) de la première pression de contact (PI) de la première lèvre de joint d'étanchéité (36) par rapport à une vitesse de rotation à laquelle l'élément de joint d'étanchéité (23) tourne avec la rotation du second élément (20) est supérieur à un second taux de changement (PO) de la seconde pression de contact (PO) de la seconde lèvre de joint d'étanchéité (37) par rapport à la vitesse de rotation.

**8.** Dispositif selon l'une quelconque des revendications 1 à 7, **caractérisé en ce que** :

la surface coulissante (24A, 24B) comprend une première surface coulissante (24A) et une seconde surface coulissante (24B),
la première lèvre de joint d'étanchéité (36) est en contact avec la première surface coulissante (24A), et
la seconde lèvre de joint d'étanchéité (37) est en contact avec la seconde surface coulissante (24B).

**9.** Dispositif selon l'une quelconque des revendications 1 à 8, **caractérisé en ce que** :

l'élément de joint d'étanchéité (23) est raccordé au second élément (20) qui réalise le mouvement de rotation,
l'élément de joint d'étanchéité (23) a une partie d'extrémité distale (52) qui est agencée au niveau d'une extrémité radialement externe de l'élément de joint d'étanchéité (23) avec un espace à partir d'une surface périphérique interne du premier élément (19), et
la partie d'extrémité distale (52) a une surface interne (53) et une surface externe (54) qui sont inclinées dans des directions mutuellement opposées, et est progressivement rétrécie radialement vers l'extérieur.

**10.** Dispositif selon l'une quelconque des revendications 1 à 9, dans lequel le dispositif d'étanchéité est prévu au niveau d'une extrémité axiale du roulement (10).

FIG.1

EP 2 469 110 B1

# F I G . 2

INSIDE OF
BEARING

OUTSIDE OF
BEARING

# FIG.3

**EP 2 469 110 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001254840 A